# EUROPEAN PATENT SPECIFICATION

(11) **EP 1 183 142 B1**
(45) Date of publication and mention of the grant of the patent: **15.01.2003**
(21) Application number: 00927052.1
(22) Date of filing: 26.04.2000
(51) Int. Cl.: B29C 45/67, F15B 15/14, B30B 1/32

(54) **HYDRAULIC PRESS APPARATUS WITH IMPROVED CONTROL OF THE OLEO-DYNAMIC CIRCUIT THEREOF**
HYDRAULISCHE PRESSVORRICHTUNG MIT VERBESSERTER STEUERFUNKTION VON DEM HYDRODYNAMISCHEN KREISLAUF
PRESSE HYDRAULIQUE DONT LA REGULATION DU CIRCUIT OLEODYNAMIQUE EST AMELIOREE

(30) Priority: 04.06.1999 IT PN990047
(43) Date of publication of application: 06.03.2002
(73) Proprietor: SIPA S.p.A., I-31029 Vittorio Veneto (IT)
(72) Inventor: PAVANETTO, Jader, I-30174 Mestre, Venezia (IT)
(74) Representative: Giugni, Valter
(86) International application number: PCT/EP00/03723
(87) International publication number: WO 00/074921

(56) References cited:
- EP-A- 0 554 662
- EP-A- 0 562 181
- DE-A- 4 243 735
- GB-A- 843 328
- US-A- 5 674 541
- PATENT ABSTRACTS OF JAPAN vol. 011, no. 125 (M-582), 18 April 1987 (1987-04-18) -& JP 61 268423 A (MATSUDA SEISAKUSHO:KK), 27 November 1986 (1986-11-27)

## Description

The present invention refers to a vertical hydraulic press apparatus adapted to most efficiently and effectively cause complementary half-moulds to clamp together in both processes used to form metal materials and, in particular, in processes aimed at injection-moulding and forming thermoplastic materials.

A very wide variety and types of hydraulic press apparatuses are largely known to be currently available and in practical use. Anyway, it can be easily noticed that the simplicity in the overall construction of such machines and an as easy and effective as possible control of the operations thereof are among the most common requirements that engineers tend to comply with when designing these presses.

The basic schematic layout of a hydraulic press apparatus used for clamping half-moulds in injection-moulding processes for forming thermoplastic materials generally includes a guide column associated to a piston adapted to slide within a hydraulic cylinder. When the upper half-mould is moved vertically with respect to the stationary lower half-mould, the hydraulic fluid that finds itself on a side of the piston is partially transferred, owing to the displacement of the piston itself, to the other side of the piston through an external circuit and at least a controlled valve.

The presence of such an external circuit, however, implies the installation of a number of mechanical component parts and further requires a lot of precision machining operations to be performed. Such a need, along with the requirement for said valve and the related control circuits to be so provided, makes the construction of such a press apparatus particularly complicated, expensive and demanding, and also quite delicate in its operation.

US-A-5 204 047 and US-A-5 302 108 are known to teach a method for making a particular type of hydraulic press apparatus using a support column for said pistons so as to minimize the overall space requirements of the press, wherein the peculiarity of this press apparatus lies in its being provided with a plurality of pistons associated to a stationary differential piston.

Although the main purpose of said patents is actually reached with such a solution, also the so obtained press apparatus, however, turns out as being too complicated and expensive in its construction and delicate in its operation, owing particularly to the really large number of hydraulic conduits that need to be dosed and opened in a synchronized pattern.

It is therefore a main purpose of the present invention to provide a vertical hydraulic press apparatus, particularly adapted for use in connection with plastic moulding processes, which is compact, reliable in its operation, uses low-cost materials, construction requirements and component parts, and has a simple and reliable construction based on the use of readily available techniques.

Such a type of press apparatus is obtained and implemented with the features that are substantially described with particular reference to the appended claims.

Anyway, features and advantages of the present invention can more readily be understood from the description that is given below by way of non-limiting example with reference to the accompanying drawings, in which:

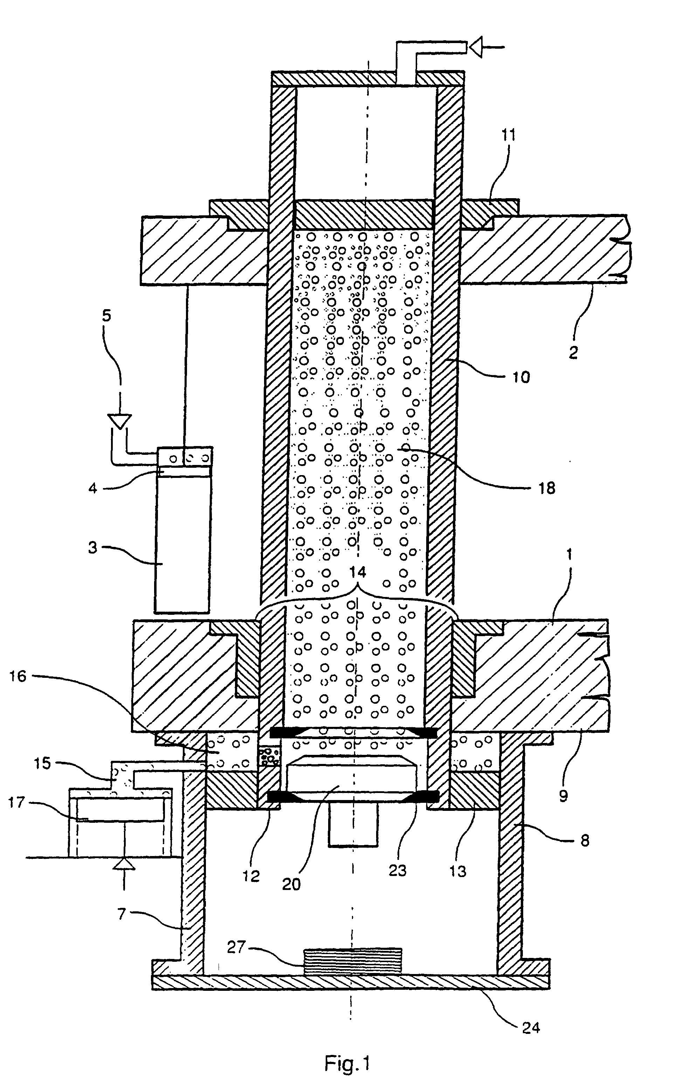

- Figures 1 through to 11 are schematical, vertical-section views of a press apparatus according to the present invention, during as many successive operating phases thereof;

With reference to the above Figures, the press apparatus according to the present invention comprises:
- a lower plate 1 and an upper plate 2 on which appropriate moulds (not shown) are applied;
- an actuation apparatus connected to said two plates and comprising a cylinder 3, a piston 4 and two conduits 5 and 6 adapted to selectively pump hydraulic fluid into the two volumes of said cylinder that are delimited and separated from each other by said piston;
- a hollow cylinder 7 provided under said lower plate and arranged with its axis extending vertically, said cylinder having its upper edge 8 arranged so as to tightly fit against the lower surface 9 of said lower plate 1;
- a guide column 10 connected with an appropriate connection means 11 to said upper plate and forming with its lower end portion 12 the rod of a piston 13 adapted to slide within said hollow cylinder 7, so that the entire guide column is able to be driven to move vertically;
- a bore 14 extending throughout said lower plate and adapted to accommodate said vertically sliding guide column;
- an aperture 15 provided in the side surface of said hollow cylinder 7 and adapted to enable the inner volume 16, which is provided above said piston, to communicate with appropriate means 17 adapted to apply a hydraulic pressure into said inner volume 16 when said piston 13 is in its lower position.

Anyway, what has been just described above belongs to the state of the art and has only been reminded here for reasons of better understanding.

According to the present invention, said guide column is provided with an inner cylindrical cavity 18 having its axis extending parallelly to the direction of displacement of the column and opening at the lower end portion 19 of the same column.

Inside said cylindrical cavity 18 there is arranged a sliding piston of the plunger type, which is formed by an upper cylindrical portion 20 and a lower portion 21.

Said upper cylindrical portion is so sized as to be able to plug said inner cylindrical cavity 18, while anyway allowing said piston to slide; moreover, the lower portion 21 of the piston is so sized as to extend downwards by a definite level, which shall be explained in greater detail further on, with respect to the upper portion, and has a width that is smaller than the width of the upper portion itself so that said lower portion will in no case be able to interfere with or touch the inner wall of said inner cylindrical cavity 18.

The wall of said guide column is provided, above the level of the piston 13, with a through-bore 22 that enables said inner volume 16 to communicate with said cylindrical cavity 18. It shall of course be appreciated that such a circumstance occurs when said plunger-type piston is displaced away from said through-bore, and the height of the upper portion of said plunger-type piston is furthermore at least equal to the height of said through-bore 22, so that said plunger-type piston is capable, in definite positions thereof, of shutting said through-bore, thereby interrupting the connection between said inner volume 16 and said cylindrical cavity 18.

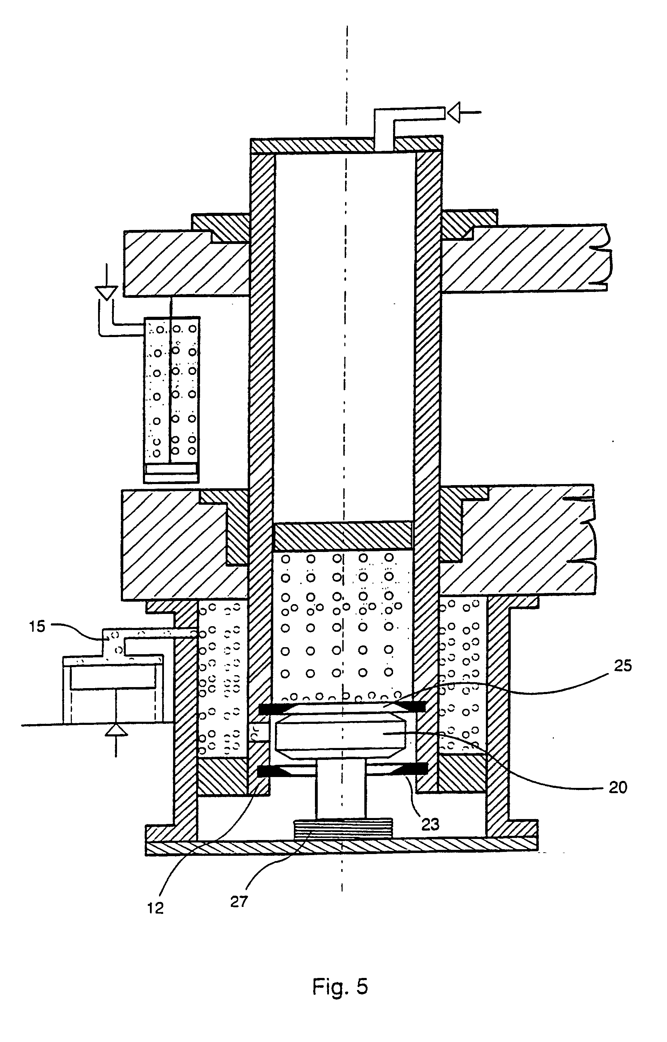

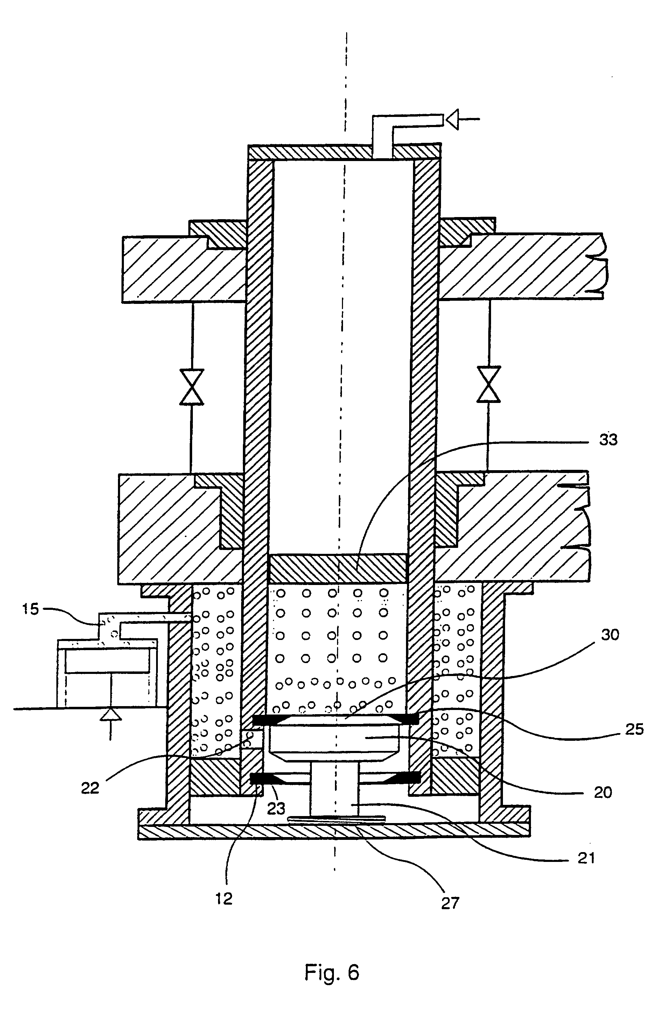

The dimensions of the various afore described members are such that, when the piston 13 and, as a result, also the guide column are displaced in their lower position, as this is illustrated in Figures 5 and 6, the upper portion of the plunger-type piston plugs said through-bore, and when the piston 13 raises to a sufficiently high position, as this is illustrated in Figures 1, 2 and 3, the floating piston remains in a lowered position by the action of gravity and, as a consequence, leaves said through-bore 22 open.

The operating mode, as anyone skilled in the art is at this point capable of realizing, is as follows:
- In a first phase (Figure 1), the guide column, and therefore also the therewith connected piston 13, is completely raised; hydraulic fluid at an appropriate pressure is let in from the conduit 5 of the cylinder 3 so as to cause the two plates 1 and 2 to move closer to each other; the floating piston is in a lowered position with respect to the through-bore 22 which, as a result, is left clear and open so as to enable the oil to flow over from the inner cylindrical cavity 18, whose volume is decreasing gradually owing to the upper plate being so caused to move downwards, to the inner volume 16 of the cylinder 7.

The floating piston does not fall back on to the bottom of the hollow cylinder 7, but is rather retained within said inner cylindrical cavity 18 by the action of an inner, preferably frusto-conical lower crown-like ring 23 which is arranged below said through-bore 22 and is adapted to stop said floating piston in a certain lower position thereof by interference with the upper cylindrical portion 20 thereof.

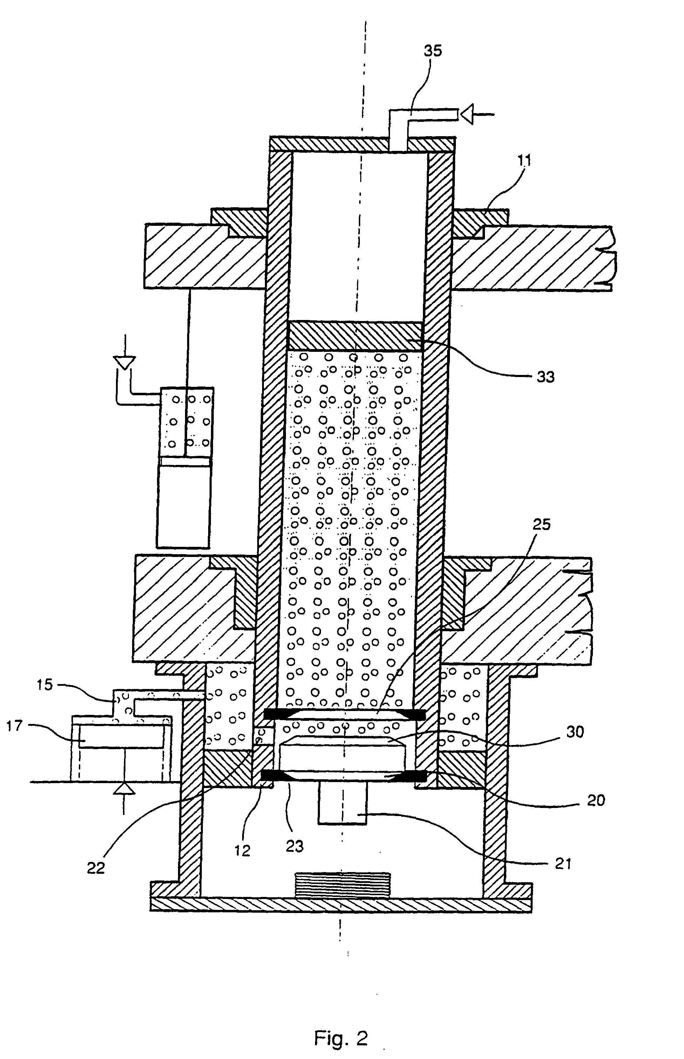

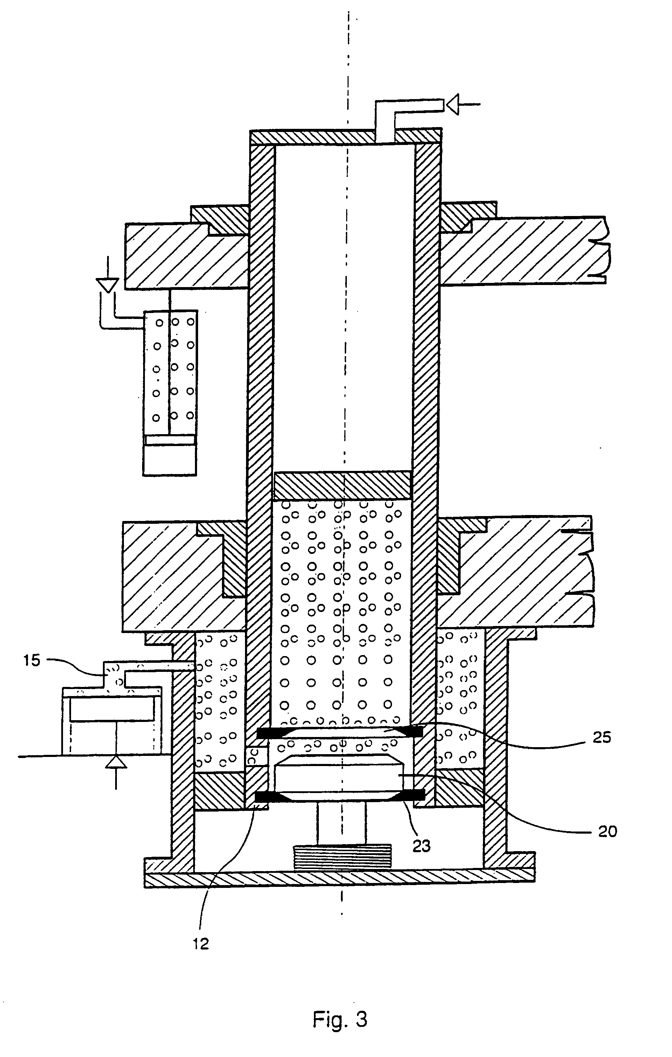

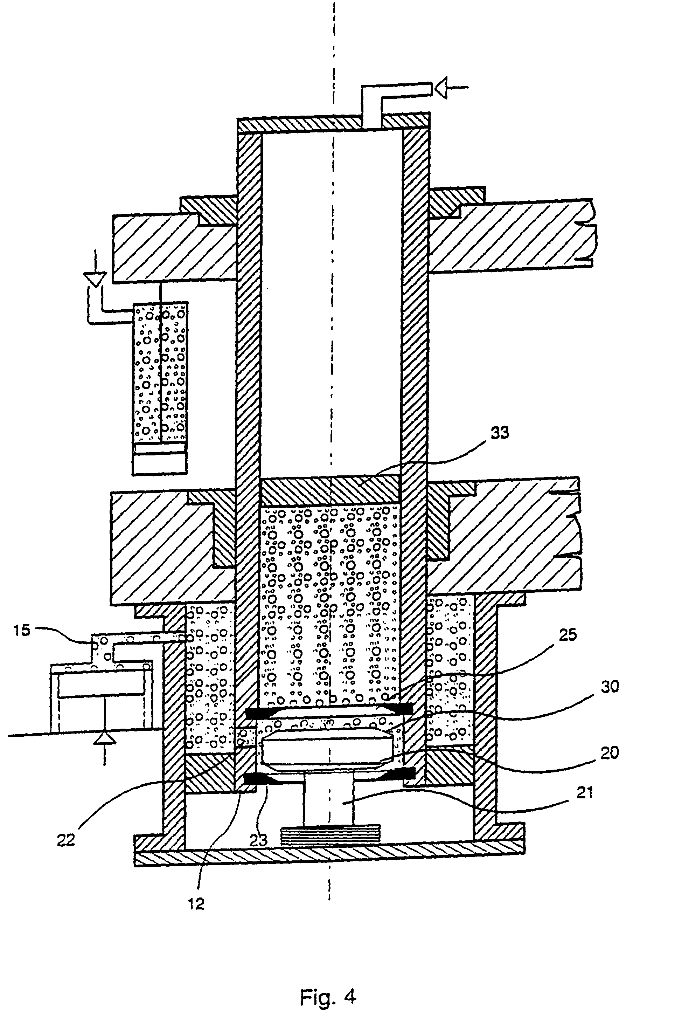

In an advantageous manner, also the lower edge 40 of said upper portion 20 is shaped in the form of a frustum of cone so as to be able to perfectly fit against the frusto-conical shape of said crown-like ring 23, while the combination of the position of said crown-like ring with the height of said upper portion of the floating piston is such that, when the latter is brought to rest on said crown-like ring, said through-bore remains clear and open.
- The next, ie. second phase (Figure 2) may be considered as an intermediate oil transfer phase. Hydraulic fluid keeps being let into the cylinder 3 from the conduit 5 and this causes the guide column, and the related plunger-type piston, to move further downwards, while the hydraulic fluid keeps flowing over as explained above.
- In the third phase (Figure 3) the guide column keeps lowering until the lower surface of the lower portion 21 of the plunger-type piston enters into contact with the bottom wall 24 of the hollow cylinder 7.
- In the fourth phase (Figure 4) the guide column keeps moving downwards and, with it, also the through-bore 22 which therefore moves closer to the level of the plunger-type piston that is prevented from lowering any further by said bottom wall 24; said through-bore starts therefore to be plugged.
- In the fifth phase (Figure 5) the guide column keeps lowering down to its bottom dead point.

In this position, in which the mould (not shown) is fully clamped, the through-bore 22 moves exactly in front of the upper cylindrical portion 20 of the plunger-type piston, which therefore plugs it. As a result, any passage of hydraulic fluid towards the inner volume 16 ceases.

In order to prevent even the smallest amount of hydraulic fluid from being able to seep through said through-bore into the cylindrical cavity 18 in the next compression phase, there is provided a second annular, preferably frusto-conical crown 25 arranged above said through-bore 22 and adapted to stop said floating piston in a definite lower position thereof by interference with the related upper cylindrical portion 20.

In an advantageous manner, also the upper edge 30 of said upper portion 20 is shaped in the form of a frustum of cone so as to be able to perfectly fit against the frusto-conical shape of said upper crown-like ring 25, while the combination of the position of said upper crown-like ring with the dimensions and the position of said upper portion of the floating piston is such that, when the latter is moved to its top dead point, the mating frusto-conical shapes of the upper crown-like ring 25 and the upper portion of the floating piston being so brought to fit against each other actually prevents any hydraulic fluid from seeping through the through-bore 22.

Furthermore, in order to prevent abrupt shocks and excessive pressures between said mating frusto-conical shapes there is provided an elastic element 27 on the bottom wall 24 of the hollow cylinder 7, which the lower portion of the plunger-type piston comes to lie against and which is further capable of absorbing, ie. taking up any possible modest interference and/or excessive coupling pressure.
- The sixth phase of the operation (Figure 6) is the phase in which the maximum extent of compression of the hydraulic fluid is brought about in view of keeping the mould firmly clamped against the expanding pressure of the part being moulded, which in fact would tend to cause the same mould to open apart. This compression is brought about by means of per sè known means 17 that are adapted to most quickly set said inner volume 16 under a high pressure by acting on the hydraulic fluid through said aperture 15 in the wall of the cylinder 7.

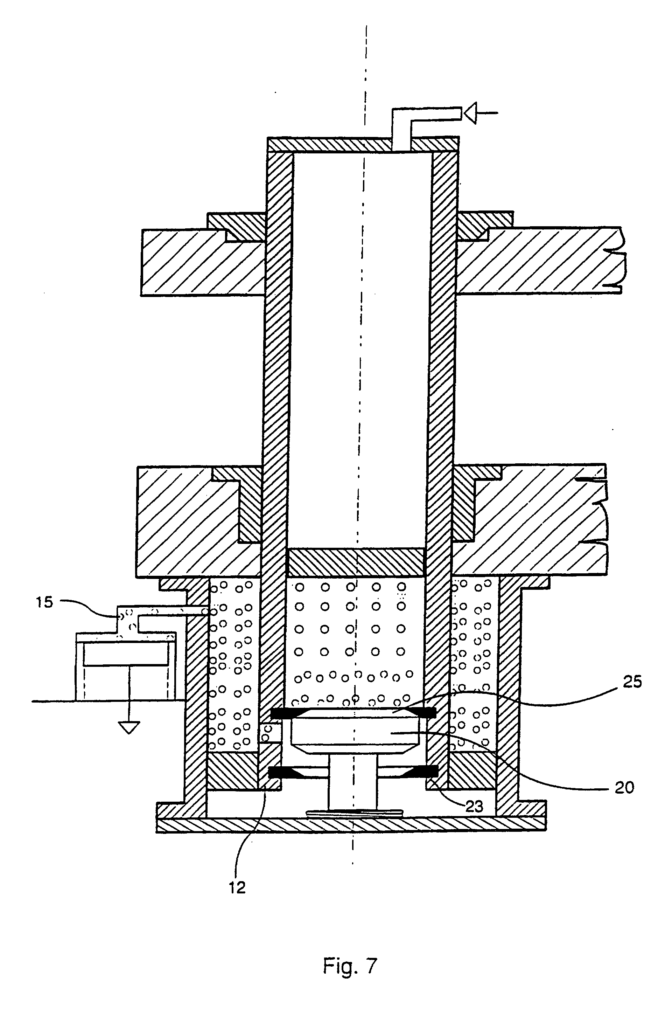

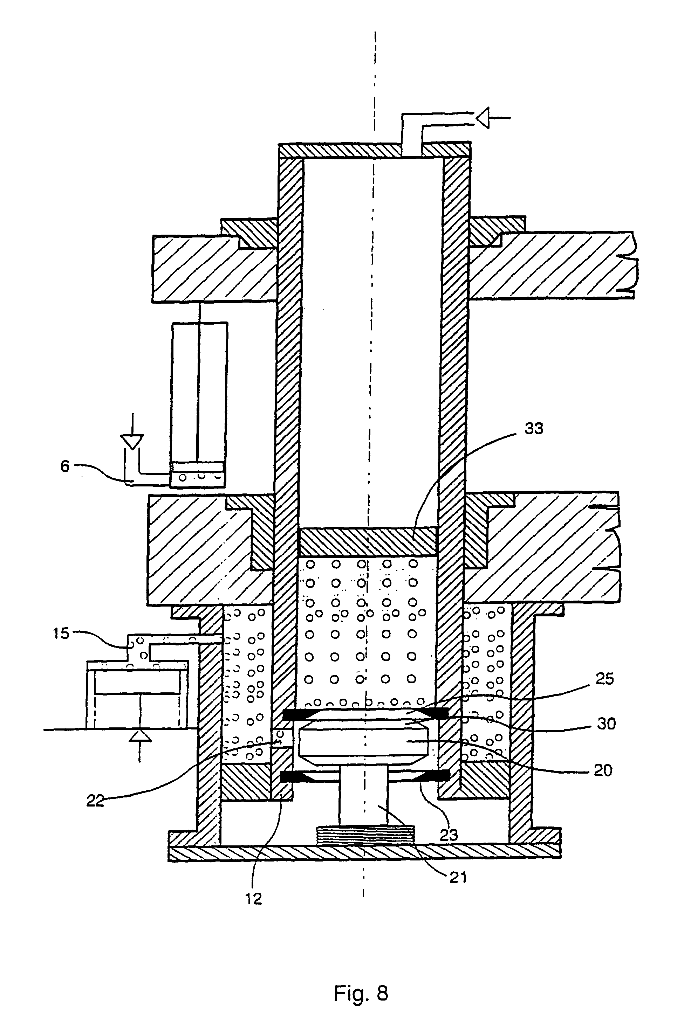

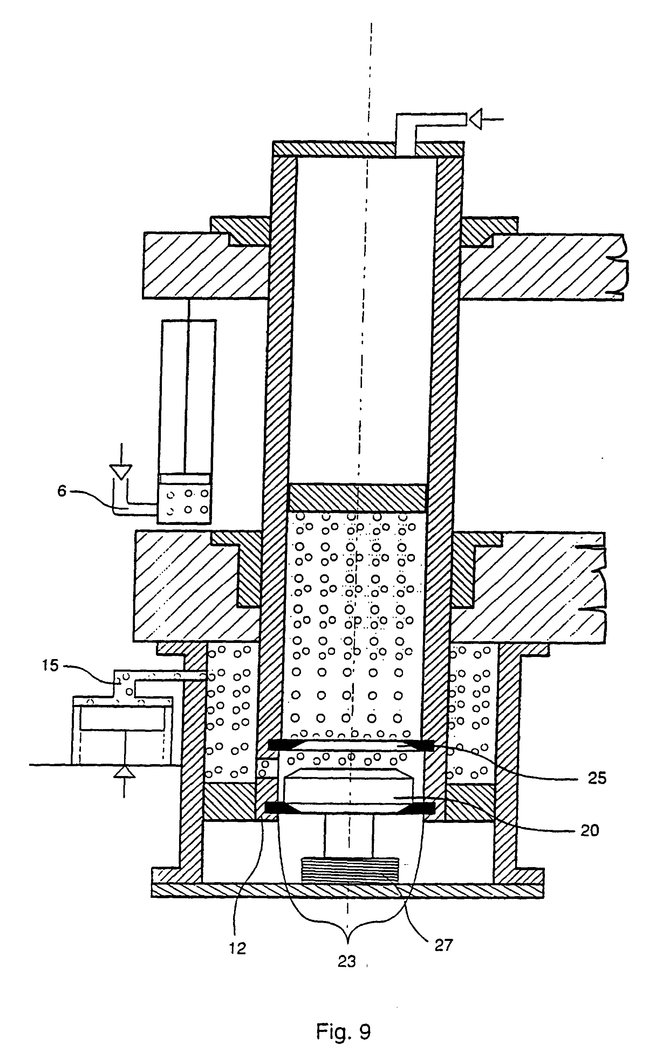

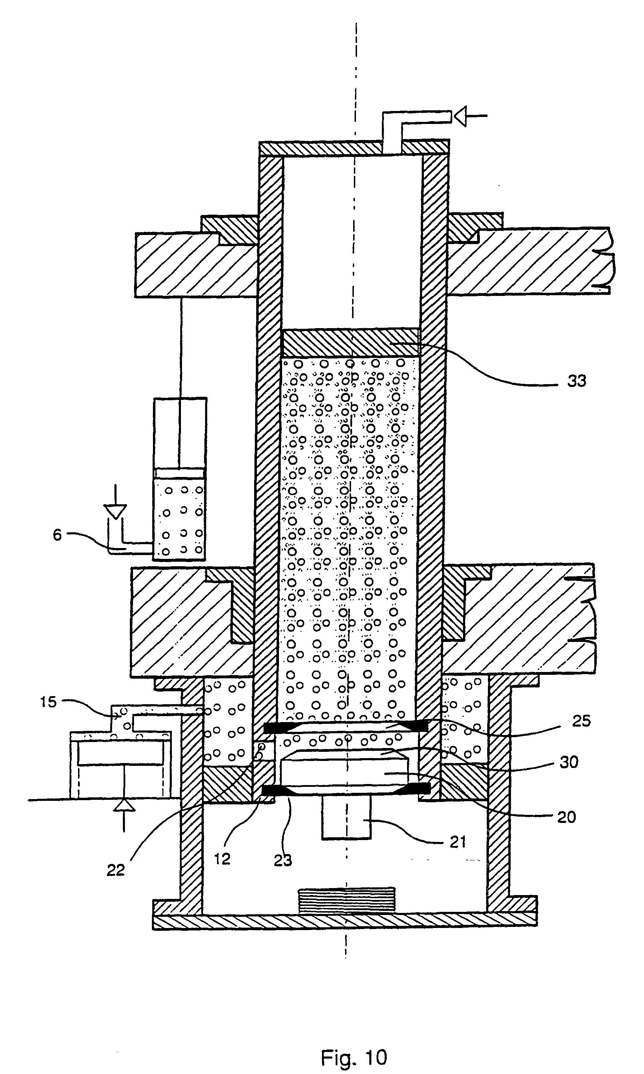

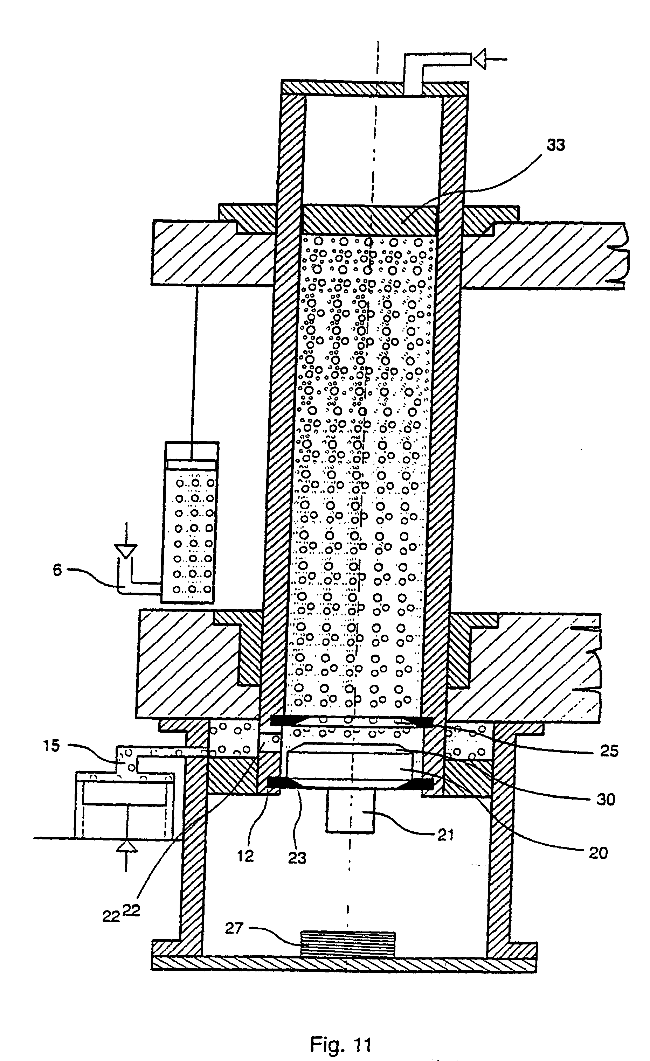

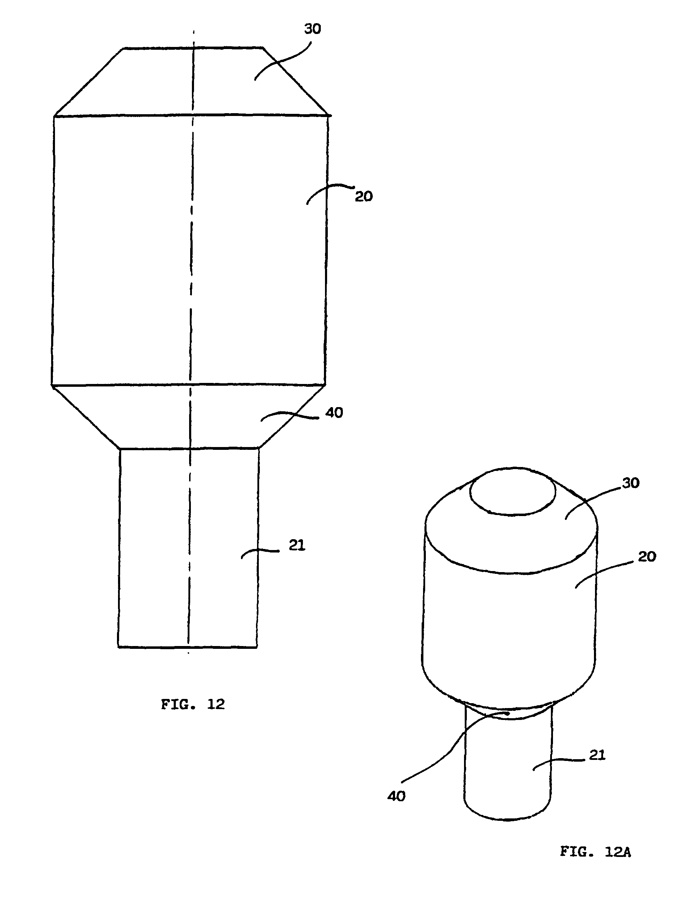

In this phase, the floating piston and the guide column do not move, ie. they stand still.
- The next seventh phase (Figure 7) corresponds to the opposite sequence of the sixth phase above. In other words, the pressure generated by said means 17 is released, while the guide column and the floating piston do not move yet.
- In the next eighth phase (Figure 8) the hydraulic fluid starts to be pumped into the conduit 6 of the cylinder 3 and this causes the upper plate 2, and therefore also the guide column, to move again upwards and the pressure on the elastic means 27 to be released by the floating piston owing to the action of also said second upper circular crown 25 being lifte jointly with the guide column.
- In the ninth phase (Figure 9) the guide column keeps raising, while the lower crown-like ring 23 is raised until it enters into contact with the lower edge of the upper cylindrical portion of the floating piston, however without causing the latter to start moving upwards yet. The through-bore 22 is opened as a result of the guide column being so raised, and the hydraulic fluid within the inner volume 16 is pushed and starts to flow over into said inner cylindrical cavity 18.
- In the tenth phase (Figure 10) the guide column still keeps raising so as to cause also the floating piston to rise by pulling it upwards owing to its having so engaged the inner lower crown-like ring 23; the hydraulic fluid keeps flowing over into the inner cylindrical cavity 18.
- In the last, ie. eleventh phase (Figure 11), the press regains a set-up which is similar to the one illustrated in Figure 1: the guide column and the upper plate reach the top dead center under a maximum extent of hydraulic fluid having been caused to flow over by this time. From this moment on, a new cycle can therefore start from the afore cited first phase.

Furthermore, in all Figures 1 through to 11 there can be noticed the presence of a cylindrical member 33 arranged in the form of a plug over the level of the hydraulic fluid in the cylindrical cavity 18. This cylindrical member 33 has the task of preventing any excessive surface vorticity, in particular during the phases in which the through-bore 22 is opened and closed; in view of promoting such a function, the volume of gas 34 above said cylindrical member is kept under a slight pneumatic pressure, preferably through an appropriate conduit 35.

The advantages of the present invention are now quite apparent and may be summarized as follows:
- smaller space taken up by the press apparatus owing to the maximum extent of efficiency in using the inner volumes of the guide column;
- maximum extent of construction and functional simplicity deriving from the elimination of any external hydraulic circuits;
- elimination of the controlled valves, under significant economic advantages deriving also from the elimination of the related control and actuation circuits.

Moreover, a press apparatus according to the present invention can be implemented with the use of materials and techniques that are readily available and fully known in the art, which furthermore show no criticity or difficulty in their utilization.

It shall be appreciated that the description and illustrations given above with reference to the accompanying drawings have been given by mere way of exemplification of the present invention, and that a number of variants and modifications can therefore introduced thereto without departing from the scope of the present invention.

## Claims

1. Hydraulic press apparatus comprising:
- a lower table (1) and an upper table (2) adapted to be driven with a vertical motion against said lower plate by means of appropriate motion and position control means (3, 4, 5, 6),
- a hollow cylinder (7) provided under said lower plate and arranged with its axis extending vertically, said cylinder having its upper edge (8) applied in a tight-fitting manner against the lower surface (9) of said lower plate (1),
- a guide column (10) connected on top to said upper plate and having its lower end portion forming the rod of a piston (13) adapted to slide within said hollow cylinder,
- a hole (14) extending throughout said lower plate (1) and adapted to accommodate said vertically sliding guide column,
- an aperture (15) provided in the side surface of said hollow cylinder (7) and adapted to enable the inner volume (16), located above said piston, to communicate with hydraulic means (17) adapted to apply a hydraulic pressure within said inner volume when said piston is in its lower position, **characterized in that**
- said guide column is provided with an inner cylindrical cavity (18) having a vertical axis and filled with hydraulic fluid, said cylindrical cavity extending into said piston (13) and coming out of the latter at the lower end portion thereof,
- there is provided a plunger-type piston adapted to slide within said inner cylindrical cavity, said piston being provided with an upper cylindrical portion (20) that has such a diameter as to be able to plug said inner cavity, and with a lower portion (21) that has a smaller diameter so as to prevent it from entering into contact with the walls of said inner cylindrical cavity (18),
- there is provided a through-bore (22) adapted to enable said inner cylindrical cavity (18) to communicate with said inner volume (16) when said upper cylindrical portion (20) of said plunger-type piston is situated under the level of said through-bore.

2. Hydraulic press apparatus according to claim 1, **characterized in that** the lengths of said two portions (20, 21) of said plunger-type piston are such that, when the piston is in its lower position, said upper cylindrical portion of said plunger-type piston is adapted to plug said through-bore (22), and when said piston is in its position corresponding to the position of greatest separation of said lower and upper plates from each other, said upper cylindrical portion of said plunger-type piston is positioned so as to at least partially clear, ie. open said through-bore.

3. Hydraulic press apparatus according to claim 2, **characterized in that**, when the piston is in its lower position, said lower portion (21) abuts with its lower edge against the bottom wall (24) of said hollow cylinder (7).

4. Hydraulic press apparatus according to claim 2 or 3, **characterized in that:**
- said upper portion (20) of said plunger-type piston is connected to said lower portion (21) thereof by means of a frusto-conical connecting portion (40),
- said inner cylindrical cavity (18) is provided inside with a frusto-conical crown-like ring (23) arranged in a position below said through-bore (22) and adapted to engage said frusto-conical connecting portion so as to prevent said plunger-type piston from further displacing downwards,
- and the height of said upper portion (20) of said plunger-type piston is not smaller than the difference in height between the upper edge of said through-bore (22) and said crown-like ring (23), so as to be able to plug said through-bore when said plunger-type piston is located above and in contact with said crown-like ring (23).

5. Hydraulic press apparatus according to any of the preceding claims 2 to 4, **characterized in that**
- the upper edge (30) of said upper portion of said plunger-type piston has a frusto-conical shape,
- said inner cylindrical cavity (18) is provided inside with a second preferably frusto-conical crown-like ring (25) arranged in a position above said through-bore and adapted to engage said upper edge (30) of said upper portion when said guide column is in its lower position.

6. Hydraulic press apparatus according to any of the preceding claims 3 to 5, **characterized in that** there is provided an elastic member (27) on the bottom wall (24) of the hollow cylinder (7), in such a position as to be able to fit between said lower portion (21) and said bottom wall (24).

7. Hydraulic press apparatus according to any of the preceding claims, **characterized in that** there is provided a cylindrical member (33) above the level of the hydraulic fluid in said cylindrical cavity (18), and that the volume (34) of gas above said cylindrical member is put under pressure preferably through an external conduit (35).

## Patentansprüche

1. Hydraulische Pressenvorrichtung, die umfasst:
- einen unteren Tisch (1) und einen oberen Tisch (2), die mittels einer geeigneten Bewegungs-und-Positionssteuer-Einrichtung (3, 4, 5, 6) mit einer vertikalen Bewegung an die untere Platte gedrückt wird;
- einen hohlen Zylinder (7), der unter der unteren Platte vorhanden und so angeordnet ist, dass sich seine Achse vertikal erstreckt, wobei die Oberkante (8) des Zylinders enganliegend an die Unterseite (9) der unteren Platte (1) gebracht wird,
- eine Führungssäule (10), die an der Oberseite der oberen Platte angebracht ist und deren unterer Endabschnitt die Stange eines Kolbens (13) bildet, der in dem hohlen Zylinder gleitet,
- ein Loch (14), das sich durch die untere Platte (1) hindurch erstreckt und die vertikal gleitende Führungssäule aufnimmt,
- eine Öffnung (15), die in der Seitenfläche des hohlen Zylinders (7) vorhanden ist und es dem Innenraum (16), der sich über dem Kolben befindet, ermöglicht, mit einer Hydraulikeinrichtung (17) in Verbindung zu treten, die einen Hydraulikdruck in dem Innenraum ausübt, wenn sich der Kolben in seiner unteren Position befindet, **dadurch gekennzeichnet, dass**:
- die Führungssäule mit einem inneren zylindrischen Hohlraum (18) versehen ist, der eine vertikale Achse hat und mit Hydraulikfluid gefüllt ist, wobei sich der zylindrische Hohlraum in den Kolben (13) hinein erstreckt und am unteren Endabschnitt desselben aus letzterem austritt,
- ein stempelartiger Kolben vorhanden ist, der in dem inneren zylindrischen Hohlraum gleitet, wobei der Kolben mit einem oberen zylindrischen Abschnitt (20), der einen Durchmesser aufweist, der es ihm ermöglicht, den inneren Hohlraum zu verschließen, sowie mit einem unteren Abschnitt (21) versehen ist, der einen kleineren Durchmesser hat, um zu verhindern, dass er mit den Wänden des inneren zylindrischen Hohlraums (18) in Kontakt kommt,
- eine Durchgangsbohrung (22) vorhanden ist, die es dem inneren zylindrischen Hohlraum (18) ermöglicht, mit dem Innenraum (16) in Verbindung zu treten, wenn sich der obere zylindrische Abschnitt (20) des stempelartigen Kolbens unter der Höhe der Durchgangsbohrung befindet.

2. Hydraulische Pressenvorrichtung nach Anspruch 1, **dadurch gekennzeichnet, dass** die zwei Abschnitte (20, 21) des stempelartigen Kolbens Längen haben, aufgrund derer, wenn sich der Kolben in seiner unteren Position befindet, der obere zylindrische Abschnitt des stempelartigen Kolben die Durchgangsbohrung (22) verschließt, und wenn sich der Kolben an seiner Position befindet, die der Position der größten Trennung der unteren und der oberen Platte voneinander entspricht, der obere zylindrische Abschnitt des stempelartigen Kolbens so angeordnet ist, dass er die Durchgangsbohrung wenigstens teilweise freigibt, d.h. öffnet

3. Hydraulische Pressenvorrichtung nach Anspruch 2, **dadurch gekennzeichnet, dass**, wenn sich der Kolben an seiner unteren Position befindet, der untere Abschnitt (21) mit seiner Unterkante an der Bodenwand (24) des hohlen Zylinders (7) anliegt.

4. Hydraulische Pressenvorrichtung nach Anspruch 1 oder 3, **dadurch gekennzeichnet, dass**:
- der obere Abschnitt (20) des stempelartigen Kolbens mit dem unteren Abschnitt (21) über einen kegelstumpfförmigen Verbindungsabschnitt (40) verbunden ist,
- der innere zylindrische Hohlraum (18) im Inneren mit einem kegelstumpfförmigen kappenartigen Ring (23) versehen ist, der an einer Position unter der Durchgangsbohrung (22) angeordnet ist und mit dem kegelstumpfförmigen Verbindungsabschnitt in Eingriff kommt, um zu verhindern, dass der stempelartige Kolben weiter nach unten verschoben wird.
- und die Höhe des oberen Abschnitts (20) des stempelartigen Kolbens nicht geringer ist als die Höhendifferenz zwischen der Oberkante der Durchgangsbohrung (22) und dem kappenartigen Ring (23), so dass er die Durchgangsbohrung verschließen kann, wenn sich der stempelartige Kolben über dem kappenartigen Ring (23) und in Kontakt damit befindet.

5. Hydraulische Pressenvorrichtung nach einem der vorangehenden Ansprüche 2 bis 4, **dadurch gekennzeichnet, dass**:
- die obere Kante (30) des oberen Abschnitts des stempelartigen Kolbens eine Kegelstumpfform hat,
- der innere zylindrische Hohlraum (18) im Inneren mit einem zweiten, vorzugsweise kegelstumpfförmigen kappenartigen Ring (25) versehen ist, der an einer Position über der Durchgangsbohrung angeordnet ist und mit der Oberkante (30) des oberen Abschnitts in Eingriff kommt, wenn sich die Führungssäule an ihrer unteren Position befindet.

6. Hydraulische Pressenvorrichtung nach einem der vorangehenden Ansprüche 3 bis 5, **dadurch gekennzeichnet, dass** ein elastisches Element (27) an der Bodenwand (24) des hohlen Zylinders (7) an einer Position vorhanden ist, die es ihm ermöglicht, zwischen den unteren Abschnitt (21) und die Bodenwand (24) zu passen.

7. Hydraulische Pressenvorrichtung nach einem der vorangehenden Ansprüche, **dadurch gekennzeichnet, dass** ein zylindrisches Element (33) über der Höhe des hydraulischen Fluids in dem zylindrischen Hohlraum (18) vorhanden ist, und dass das Volumen (34) aus Gas über dem zylindrischen Element vorzugsweise über eine externe Leitung (35) unter Druck gesetzt wird.

## Revendications

1. Presse hydraulique comprenant :
- un plateau inférieur (1) et un plateau supérieur (2) adapté pour être entraîné avec un mouvement vertical contre ledit plateau inférieur par l'intermédiaire de moyens appropriés de commande de mouvement et de position (3, 4, 5, 6).
- un cylindre creux (7) prévu sous ledit plateau inférieur et disposé avec son axe s'étendant verticalement, ledit cylindre ayant son bord supérieur (8) appliqué par ajustage serré contre la surface inférieure (9) dudit plateau inférieur (1),
- une colonne de guidage (10) reliée au sommet audit plateau supérieur et avec sa partie d'extrémité inférieure formant la tige d'un piston (13) adapté pour coulisser à l'intérieur dudit cylindre creux,
- un trou (14) s'étendant complètement à travers ledit plateau inférieur (1) et adapté pour recevoir ladite colonne verticale coulissante de guidage,
- une ouverture (15) prévue dans la surface latérale dudit cylindre creux (7) et adaptée pour permettre au volume interne (16), situé au-dessus dudit piston, de communiquer avec des moyens hydrauliques (17) adaptés pour appliquer une pression hydraulique à l'intérieur dudit volume interne quand ledit piston est dans sa position inférieure, **caractérisée en ce que**
- ladite colonne de guidage est pourvue d'une cavité cylindrique interne (18) avec un axe vertical et remplie de fluide hydraulique, ladite cavité cylindrique s'étendant à l'intérieur dudit piston (13) et débouchant de ce dernier au niveau de la partie d'extrémité inférieure de celui-ci,
- il est prévu un piston de type plongeur adapté pour coulisser à l'intérieur de ladite cavité cylindrique interne, ledit piston étant muni d'une partie cylindrique supérieure (20) qui a un diamètre tel qu'il soit en mesure d'obturer ladite cavité interne, et d'une partie inférieure (21) qui a un diamètre inférieur de manière à l'empêcher de venir en contact avec les parois de ladite cavité cylindrique interne (18),
- il est prévu un alésage débouchant (22) adapté pour permettre à ladite cavité cylindrique interne (18) de communiquer avec ledit volume interne (16) quand ladite partie cylindrique supérieure (20) dudit piston de type plongeur est située au-dessous du niveau dudit alésage débouchant.

2. Presse hydraulique selon la revendication 1, **caractérisée en ce que** les longueurs desdites deux parties (20, 21) dudit piston de type plongeur sont telles que, quand le piston est dans sa position inférieure, ladite partie cylindrique supérieure dudit piston de type plongeur est adaptée pour obturer ledit alésage débouchant (22) et, quand ledit piston est dans sa position correspondant à la position d'écartement maximal réciproque desdits plateaux inférieur et supérieur, ladite partie cylindrique supérieure dudit piston de type plongeur est positionné de manière à dégager, c'est-à-dire ouvrir, au moins partiellement ledit alésage débouchant.

3. Presse hydraulique selon la revendication 2, **caractérisée en ce que**, quand le piston est dans sa position inférieure, ladite partie inférieure (21) est en butée avec son bord inférieur contre la paroi de fond (24) dudit cylindre creux (7).

4. Presse hydraulique selon la revendication 2 ou 3, **caractérisée en ce que** :
- ladite partie supérieure (20) dudit piston de type plongeur est reliée à ladite partie inférieure (21) de celui-ci au moyen d'une partie tronconique de liaison (40),
- ladite cavité cylindrique interne (18) est munie à l'intérieur d'un anneau tronconique en forme de couronne (23) disposé dans une position au-dessous dudit alésage débouchant (22) et adapté pour coopérer avec ladite partie tronconique de liaison de manière à empêcher ledit piston de type plongeur de se déplacer ultérieurement vers le bas,
- et la hauteur de ladite partie supérieure (20) dudit piston de type plongeur n'est pas inférieure à la différence en hauteur entre le bord supérieur dudit alésage débouchant (22) et ledit anneau en forme de couronne (23), de manière à pouvoir obturer ledit alésage débouchant quand ledit piston de type plongeur est situé au-dessus et en contact avec ledit anneau en forme de couronne (23).

5. Presse hydraulique selon l'une quelconque des revendications précédentes 2 à 4, **caractérisée en ce que**
- ledit bord supérieur (30) de ladite partie supérieure dudit piston de type plongeur a une forme tronconique,
- ladite cavité cylindrique interne (18) est munie à l'intérieur d'un deuxième anneau en forme de couronne de préférence tronconique (25) disposé dans une position au-dessus dudit alésage débouchant pour coopérer avec le bord supérieur (30) de ladite partie supérieure quand ladite colonne de guidage est dans sa position inférieure.

6. Presse hydraulique selon l'une quelconque des revendications précédentes 3 à 5, **caractérisée en ce qu'**il est prévu un élément élastique (27) sur la paroi du fond (24) du cylindre creux (7), dans une position telle qu'il puisse s'adapter entre ladite partie inférieure (21) et ladite paroi du fond (24).

7. Presse hydraulique selon l'une quelconque des revendications précédentes, **caractérisée en ce qu'**il est prévu un élément cylindrique (33) au-dessus du niveau du fluide hydraulique dans ladite cavité cylindrique (18) et **en ce que** le volume (34) de gaz au-dessus dudit élément cylindrique est mis sous pression de préférence à travers un conduit externe (35).
